(19) **Europäisches Patentamt / European Patent Office / Office européen des brevets**

(11) **EP 4 672 614 A1**

(12) **EUROPEAN PATENT APPLICATION**

(43) Date of publication:
**31.12.2025 Bulletin 2026/01**

(51) International Patent Classification (IPC):
**H03M 7/30** (2006.01)          **H04N 19/146** (2014.01)
**H04N 19/46** (2014.01)

(21) Application number: **24306003.5**

(22) Date of filing: **24.06.2024**

(52) Cooperative Patent Classification (CPC):
**H04N 19/146; H04N 19/46**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
- **FILOCHE, Thierry**
  **35410 CHATEAUGIRON (FR)**
- **ONNO, Stephane**
  **35760 SAINT GREGOIRE (FR)**
- **QUINQUIS, Cyril**
  **35520 MELESSE (FR)**

(74) Representative: **Vossius & Partner Patentanwälte Rechtsanwälte mbB Siebertstraße 3 81675 München (DE)**

(54) **TECHNIQUES FOR CARRYING COMPRESSED INTERMEDIATE DATA TENSORS**

(57)    System, methods, and instrumentalities are disclosed for carrying compressed intermediate data tensors. An example device for media encoding may receive media data. The device may generate intermediate data based on the media data. A portion of the intermediate data may be associated with an intermediate data tensor. The device may determine a set of intermediate data tensors based on a tensor characteristic associated with the intermediate data tensor. The set of intermediate data tensors may include the intermediate data tensor. The device may generate a compressed set of intermediate data tensors based on the set of intermediate data tensors and a compression profile associated with the set of intermediate data tensors. The device may include the compressed set of intermediate data tensors and metadata associated with the compressed set of intermediate data tensors in a bitstream.

FIG. 8

**Description**

**BACKGROUND**

Video coding systems may be used to compress digital video signals, e.g., to reduce the storage and/or transmission bandwidth needed for such signals. Video coding systems may include, for example, block-based, wavelet-based, and/or object-based systems.

**SUMMARY**

System, methods, and instrumentalities are disclosed for carrying compressed intermediate data tensors.

An example device for media encoding may include a processor configured to perform one or more actions. The device may receive media data. The device may generate intermediate data based on the media data. A portion of the intermediate data may be associated with an intermediate data tensor. The device may determine a set of intermediate data tensors based on a tensor characteristic (e.g., one or more of a tensor type, a tensor name, a tensor shape, a number of tensor elements, etc.) associated with the intermediate data tensor. The set of intermediate data tensors may include the intermediate data tensor. The device may generate a compressed set of intermediate data tensors based on the set of intermediate data tensors and a compression profile associated with the set of intermediate data tensors. The device may include the compressed set of intermediate data tensors and metadata associated with the compressed set of intermediate data tensors in a bitstream.

The metadata may include a split point identifier associated with a split point configuration. The split point configuration may include the compression profile associated with the set of intermediate data tensors. The metadata may include compression information indicating at least the tensor characteristic of the set of intermediate data tensors associated with the compression profile. The metadata may include a compression profile identifier associated with the compression profile associated with the set of intermediate data tensors. The metadata may include a compression granularity indicating whether the compression profile is globally applied to the set of intermediate data tensors or individually to each intermediate data tensor in the set of intermediate data tensors.

The metadata may include a group identifier associated with the set of intermediate data tensors. The metadata may include a tensor type associated with the set of intermediate data tensors. The metadata may include one or more tensor names associated with the set of intermediate data tensors. The metadata may include one or more tensor values associated with the set of intermediate data tensors. The metadata may include a bitstream format structure identifier.

The device may obtain a plurality of intermediate data tensors associated with the intermediate data. The plurality of intermediate data tensors may include the set of intermediate data tensors. The set of intermediate data tensors may be determined based on one or more of a tensor type, a data characteristic (e.g., one or more of a data size, a data similarity, a data type, a data format, a data value, etc.), or a model characteristic (e.g., a latency requirement, an accuracy requirement, etc.).

The intermediate data tensor may be a first intermediate data tensor. The device may determine a tensor type associated with the first intermediate data tensor. The device may determine that a second intermediate data tensor is the same tensor type as that of the first intermediate data tensor. The device may determine to include the first and the second intermediate data tensors in the set of intermediate data tensors based on the determination that the second intermediate data tensor is the same tensor type as that of the first intermediate data tensor.

The device may determine that a data size associated with the first intermediate data tensor is smaller than a data size threshold. The device may determine that a data size associated with a second intermediate data tensor is smaller than the data size threshold. The device may determine to include the first and the second intermediate data tensors in the set of intermediate data tensors based on the determination that the data size associated with the first intermediate data tensor is smaller than the data size threshold and the determination that the data size associated with the second intermediate data tensor is smaller than the data size threshold.

The set of intermediate data tensors may be associated with the tensor characteristic. The compression profile may be selected from a list of compression profiles based on the tensor characteristic associated with the set of intermediate data tensors. The compression profile may be selected from a list of compression profiles based on a a latency metric and an accuracy metric associated with the compression profile. The compression profile may be selected from a list of compression profiles based on a threshold performance requirement associated with a data processing task to be performed by the device. The compression profile may be selected from a list of compression profiles based on an available bandwidth for a transmission of the intermediate data.

The latency metric associated with the compression profile may indicate an artificial intelligence (AI) or machine learning (ML) task latency. The AI or ML task latency may include one or more of: an inference latency of a first part of a data processing model associated with the device, an inference latency of a second part of the data processing model associated with a media decoding device, a transfer latency of the intermediate data, a compression latency associated with the device, or the decompression latency associated with the media decoding device. The device may determine a split point configuration that indicates a list of compression profiles and an association between the set of intermediate data tensors and the compression profile of the list of compression profiles.

An example device for media decoding may include a processor configured to perform one or more actions. The device may receive, in a bitstream, a compressed set of intermediate data tensors and metadata associated with the compressed set of intermediate data tensors. The device may generate a set of intermediate data tensors based on the compressed set of intermediate data tensors and the metadata associated with the compressed set of intermediate data tensors (e.g., the device may obtain a compression profile based on the metadata (and a split point configuration) and/or decompress the compressed set of intermediate data tensors based on the compression profile). The metadata may indicate a compression profile associated with the set of intermediate data tensors. The device may determine a plurality of model parameters associated with a data processing model based on the set of intermediate data tensors. For example, the device may apply (e.g., infer such as apply data processing) a data processing task/model based on decompressed intermediate data tensor(s). The device may determine an output of the data processing model using the plurality of model parameters associated with the data processing model (e.g., the device may generate an output of a data processing task using the data processing model).

The metadata may include a split point identifier associated with a split point configuration. The split point configuration may include the compression profile associated with the set of intermediate data tensors. The metadata may include compression information indicating at least a tensor characteristic of the set of intermediate data tensors associated with the compression profile. The metadata may include a compression profile identifier associated with the compression profile associated with the set of intermediate data tensors. The metadata may include a compression granularity indicating whether the compression profile is to be globally applied to the set of intermediate data tensors or individually to each intermediate data tensor in the set of intermediate data tensors.

The metadata may include a group identifier associated with the set of intermediate data tensors. The metadata may include a tensor type associated with the set of intermediate data tensors. The metadata may include one or more tensor names associated with the set of intermediate data tensors. The metadata may include one or more tensor values associated with the set of intermediate data tensors. The metadata may include a bitstream format structure identifier.

The data processing model may be an artificial intelligence (AI) model associated with a split point configuration.

An example method for media encoding may involve receiving media data. The method may involve generating intermediate data based on the media data. A portion of the intermediate data may be associated with an intermediate data tensor. The method may involve determining a set of intermediate data tensors based on a tensor characteristic associated with the intermediate data tensor. The set of intermediate data tensors may include the intermediate data tensor. The method may involve generating a compressed set of intermediate data tensors based on the set of intermediate data tensors and a compression profile associated with the set of intermediate data tensors. The method may involve including the compressed set of intermediate data tensors and metadata associated with the compressed set of intermediate data tensors in a bitstream.

An example method for media decoding may involve receiving, in a bitstream, a compressed set of intermediate data tensors and metadata associated with the compressed set of intermediate data tensors. The method may involve generating a set of intermediate data tensors based on the compressed set of intermediate data tensors and the metadata associated with the compressed set of intermediate data tensors (e.g., obtaining a compression profile based on the metadata (and a split point configuration) and/or decompressing the compressed set of intermediate data tensors based on the compression profile). The metadata may indicate a compression profile associated with the set of intermediate data tensors. The method may involve determining a plurality of model parameters associated with a data processing model based on the set of intermediate data tensors. For example, the method may include applying (e.g., inferring such as applying data processing) a data processing task/model based on decompressed intermediate data tensor(s). The method may involve determining an output of the data processing model using the plurality of model parameters associated with the data processing model (e.g., generating an output of a data processing task using the data processing model).

The metadata may include a split point identifier associated with a split point configuration. The split point configuration may include the compression profile associated with the set of intermediate data tensors. The metadata may include compression information indicating at least the tensor characteristic of the set of intermediate data tensors associated with the compression profile. The metadata may include a compression profile identifier associated with the compression profile associated with the set of intermediate data tensors. The metadata may include a compression granularity indicating whether the compression profile is globally applied to the set of intermediate data tensors or individually to each intermediate data tensor in the set of intermediate data tensors.

## BRIEF DESCRIPTION OF THE DRAWINGS

FIG. 1A is a system diagram illustrating an example communications system in which one or more disclosed embodiments may be implemented.

FIG. 1B is a system diagram illustrating an example wireless transmit/receive unit (WTRU) that may be used within the communications system illustrated in FIG. 1A according to an embodiment.

FIG. 1C is a system diagram illustrating an example radio access network (RAN) and an example core network (CN) that may be used within the communications system illustrated in FIG. 1A according to an embodiment.

FIG. 1D is a system diagram illustrating a further example RAN and a further example CN that may be used within the communications system illustrated in FIG. 1A according to an embodiment.

FIG. 2 illustrates an example video encoder.

FIG. 3 illustrates an example video decoder.

FIG. 4 illustrates an example of a system in which various aspects and examples may be implemented.

FIG. 5 illustrates an example split inference between a WTRU and the network (e.g., with a media data source in the WTRU).

FIG. 6 illustrates an example split inference between a WTRU and the network (e.g., with a media data source in the network).

FIG. 7 illustrates an example of a model split.

FIG. 8 illustrates an example split inference (e.g., with compression of intermediate data) between a first device and a second device (e.g., with a media data source in the first device).

## DETAILED DESCRIPTION

A more detailed understanding may be had from the following description, given by way of example in conjunction with the accompanying drawings.

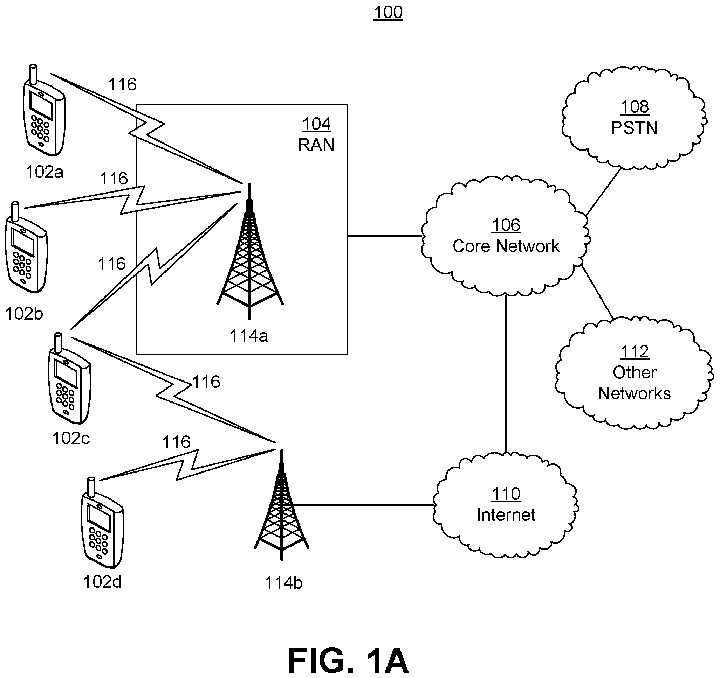

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA," may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

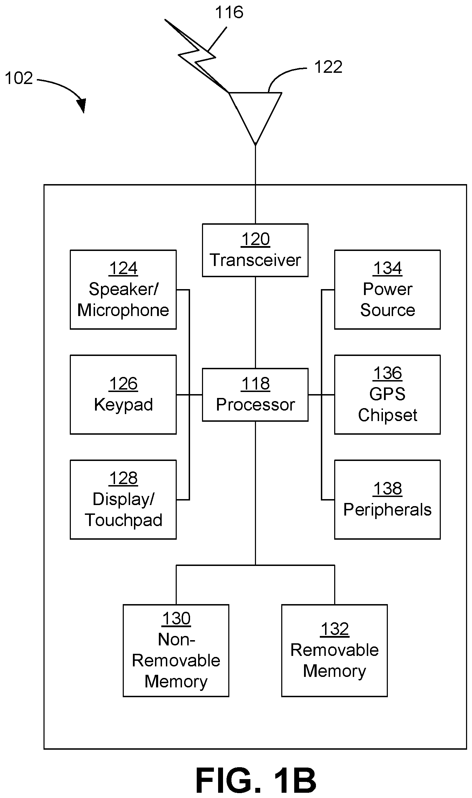

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

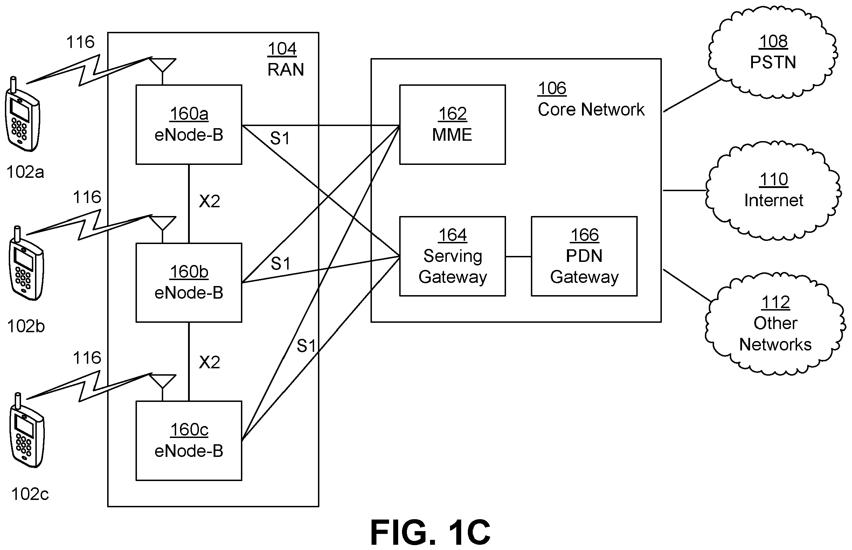

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

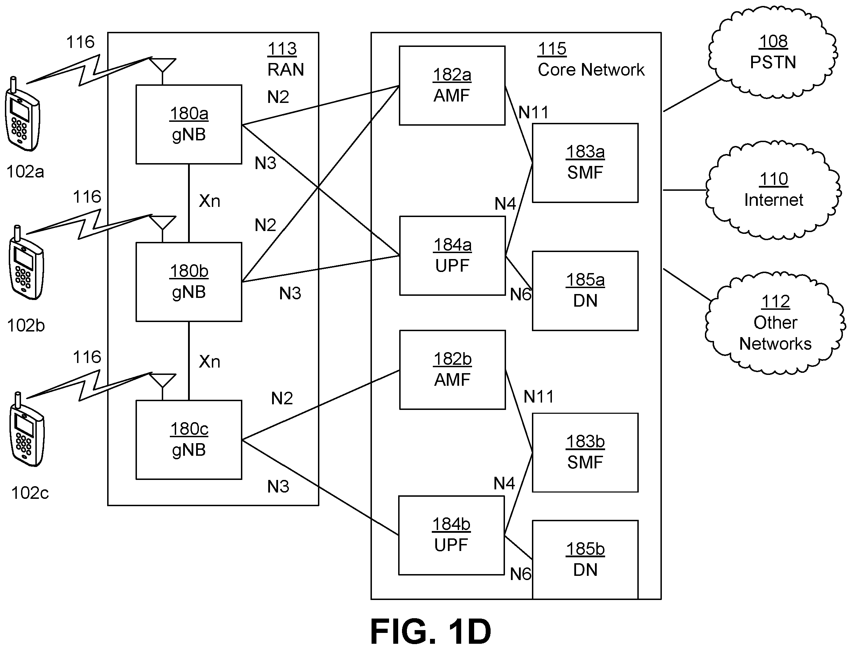

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the ON 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, ON 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

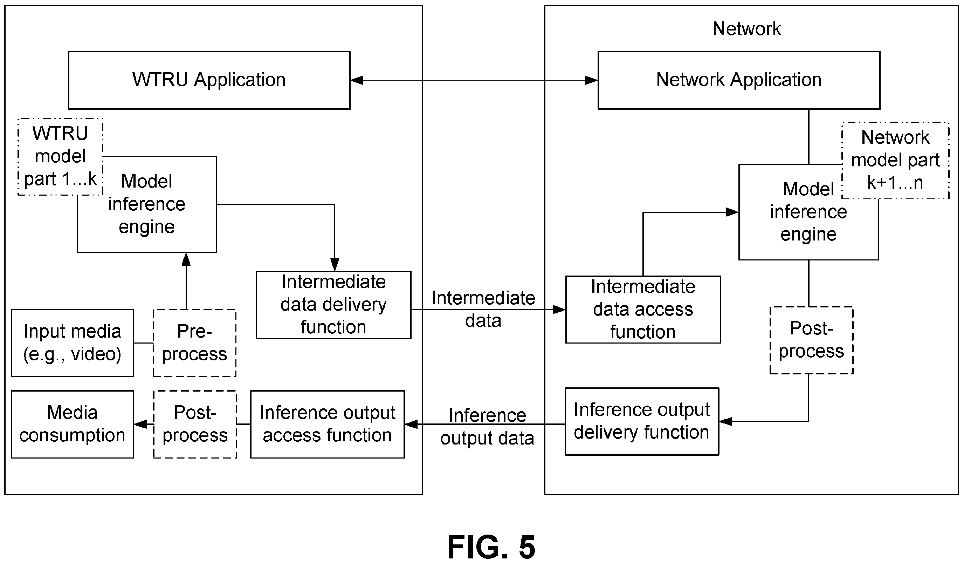

The aspects described and contemplated in this application may be implemented in many different forms. FIGs. 5-8 described herein may provide some examples, but other examples are contemplated. The discussion of FIGs. 5-8 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first," "second," etc., may be used in various examples to modify an element, component, step, operation, etc., such as, for example, a "first decoding" and a "second decoding." Use of such terms does not imply an ordering to the modified operations unless specifically required. So, in this example, the first decoding need not be performed before the second decoding, and may occur, for example, before, during, or in an overlapping time period with the second decoding.

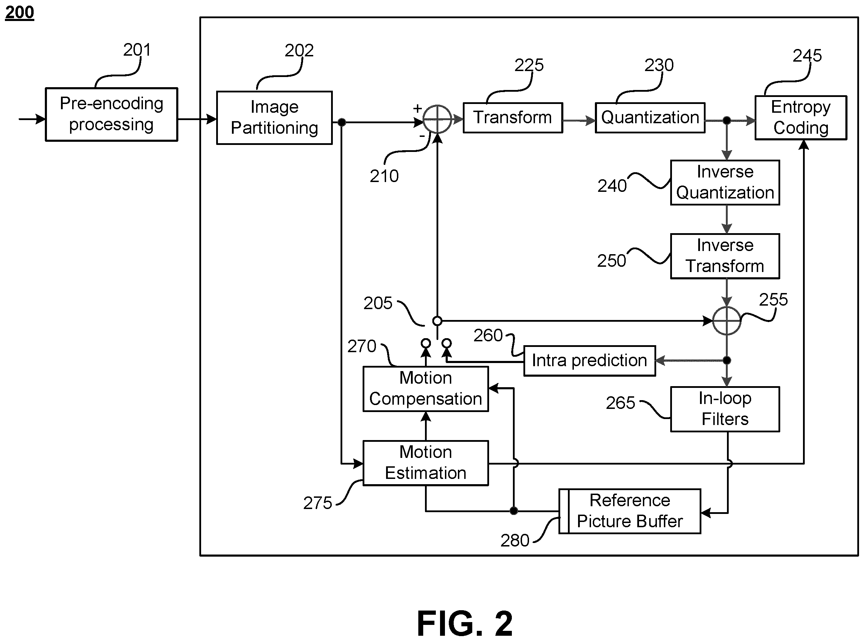

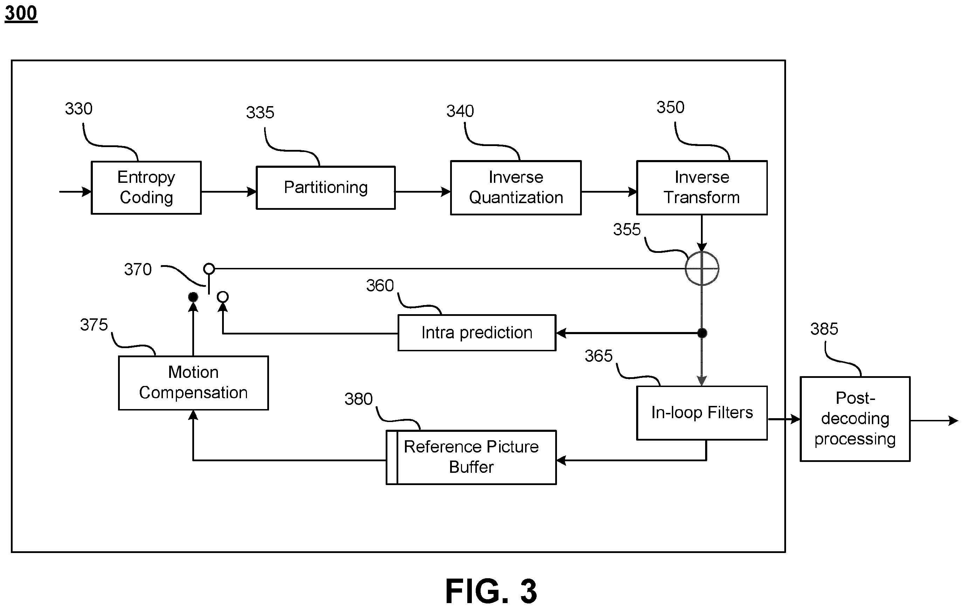

Various methods and other aspects described in this application may be used to modify modules, for example, decoding modules, of a video encoder 200 and decoder 300 as shown in FIG. 2 and FIG. 3. Moreover, the subject matter disclosed herein may be applied, for example, to any type, format or version of video coding, whether described in a standard or a recommendation, whether preexisting or future-developed, and extensions of any such standards and recommendations. Unless indicated otherwise, or technically precluded, the aspects described in this application may be used individually or in combination.

Various numeric values are used in examples described the present application, such as 1, 2, 4, 7, 8, 16, 32, 64, etc. These and other specific values are for purposes of describing examples and the aspects described are not limited to these specific values.

FIG. 2 is a diagram showing an example video encoder 200. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata (e.g., which may include film grain parameters determined by pre-processing as described herein) may be associated with the pre-processing and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the nontransformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380).

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream. In an example, the decoded images (e.g., after application of the in-loop filters (365) and/or after post-decoding processing (385), if post-decoding processing is used) may be sent to a display device for rendering to a user.

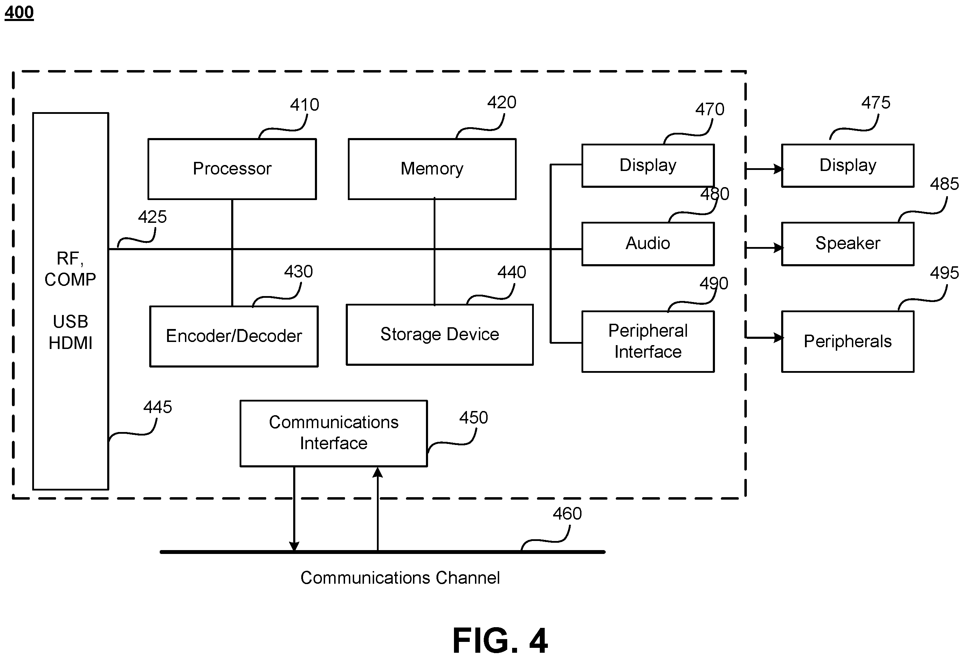

FIG. 4 is a diagram showing an example of a system in which various aspects and examples described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video encoding and decoding operations.

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various examples, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain examples, (iv) demodulating the down-converted and band-limited signal, (v) performing error correction, and/or (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, down-converting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

The USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the data stream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 445. Still other examples provide streamed data to the system 400 using the RF connection of the input block 445. As indicated above, various examples provide data in a non-streaming manner. Additionally, various examples use wireless networks other than Wi-Fi, for example a cellular network or a Bluetooth® network.

The system 400 can provide an output signal to various output devices, including a display 475, speakers 485, and other peripheral devices 495. The display 475 of various examples includes one or more of, for example, a touchscreen display, an organic light-emitting diode (OLED) display, a curved display, and/or a foldable display. The display 475 may be for a television, a tablet, a laptop, a cell phone (mobile phone), or another device. The display 475 can also be integrated with other components (for example, as in a smart phone), or separate (for example, an external monitor for a laptop). The other peripheral devices 495 include, in various examples, one or more of a stand-alone digital video disc (or digital versatile disc) (DVD, for both terms), a disk player, a stereo system, and/or a lighting system. Various examples use one or more peripheral devices 495 that provide a function based on the output of the system 400. For example, a disk player performs the function of playing the output of the system 400.

In various examples, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various examples, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various examples in which the display 475 and speakers 485 are external components, the output signal may be provided via dedicated output connections, including, for example, HDMI ports, USB ports, or COMP outputs.

The examples may be carried out by computer software implemented by the processor 410 or by hardware, or by a combination of hardware and software. As a non-limiting example, the examples may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding," as used in this application, can encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. In various examples, such processes also, or alternatively, include processes performed by a decoder of various implementations described in this application, for example, receiving, in a bitstream, a compressed set of intermediate data tensors and metadata associated with the compressed set of intermediate data tensors; generating a set of intermediate data tensors based on the compressed set of intermediate data tensors and the metadata associated with the compressed set of intermediate data tensors, wherein the metadata indicates a compression profile associated with the set of intermediate data tensors; determining a plurality of model parameters associated with a data processing model based on the set of intermediate data tensors; determining an output of the data processing model using the plurality of model parameters associated with the data processing model; etc.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding," "encoding" as used in this application can encompass all or part of the processes performed, for example, on an input video sequence in order to produce an encoded bitstream. In various examples, such processes include one or more of the processes typically performed by an encoder, for example, partitioning, differential encoding, transformation, quantization, and entropy encoding. In various examples, such processes also, or alternatively, include processes performed by an encoder of various implementations described in this application, for example, receiving media data; generating intermediate data based on the media data, wherein a portion of the intermediate data is associated with an intermediate data tensor; determining a set of intermediate data tensors based on a tensor characteristic associated with the intermediate data tensor, wherein the set of intermediate data tensors comprises the intermediate data tensor; generating a compressed set of intermediate data tensors based on the set of intermediate data tensors and a compression profile associated with the set of intermediate data tensors; including the compressed set of intermediate data tensors and metadata associated with the compressed set of intermediate data tensors in a bitstream; etc.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein, for example, Compression profile id, Compression profile name, Quantization parameter, Compression level, etc., are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation," as well as other variations thereof, means that a particular feature, structure, characteristic, and so forth described in connection with the example is included in at least one example. Thus, the appearances of the phrase "in one example" or "in an example" or "in one implementation" or "in an implementation," as well any other variations, appearing in various places throughout this application are not necessarily all referring to the same example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing," intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/," "and/or," and "at least one of," for example, in the cases of "A/B," "A and/or B," and "at least one of A and B" is intended to encompass the selection of the first listed option (A) only, or the selection of the second listed option (B) only, or the selection of both options (A and B). As a further example, in the cases of "A, B, and/or C" and "at least one of A, B, and C," such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. Encoder signals may include, for example, number of intensity intervals, number of model values, grain parameters, grain identification, scaling factor, etc. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various examples. It is to be appreciated that signaling may be accomplished in a variety of ways. For example, one or more syntax elements, flags, and so forth are used to signal information to a corresponding decoder in various examples. While the preceding relates to the verb form of the word "signal," the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on, or accessed or received from, a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g., using a monitor, screen, or other type of display) a resulting image (e.g., an image from residual reconstruction of the video bitstream). The TV, set-top box, cell phone, tablet, or other electronic device may receive a signal including an encoded image and perform decoding.

Feature(s) associated with split inferencing of trained model(s) are provided herein.

FIG. 5 illustrates an example split inference between a wireless transmit/receive unit (WTRU) and the network, with media data source in the WTRU.

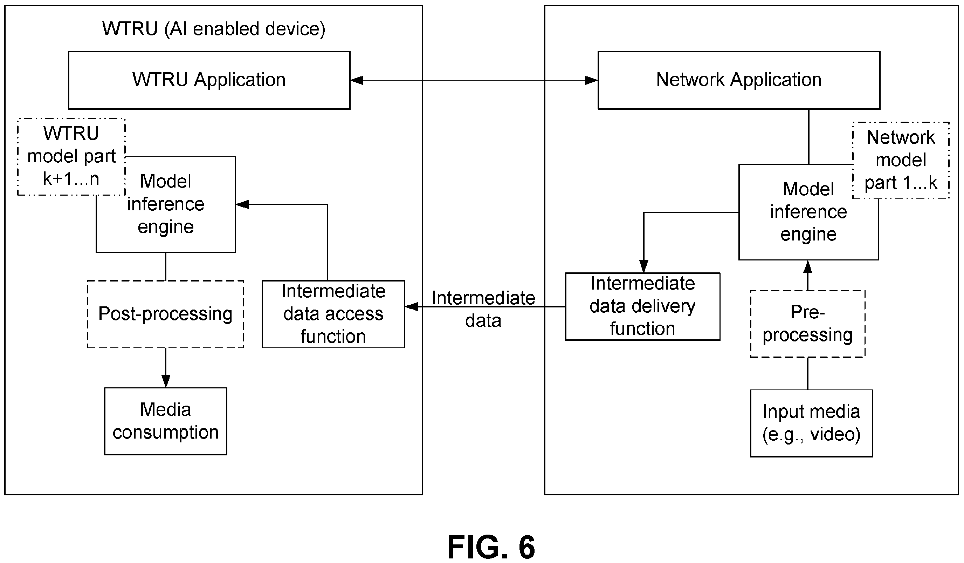

FIG. 6 illustrates an example split inference between a WTRU and the network, with media data source in the network.

FIGs. 5 and 6 illustrate example architectures (e.g., 3GPP SA4 AI4media) for split inferences of a model. The model may be composed of n layers or nodes (1..n) between the network and a WTRU. A first inference may process a first part of the model (e.g., layers 1..k). A second inference may process a second part of the model (e.g., layers k+1..n). The architectures show the delivery and access functions of intermediate data between the WTRU and the network (e.g., in two different scenarios).

FIG. 5 illustrates example delivery and access functions if the media data source originates from the WTRU. In this case, the first part of the inference may be performed by/in the WTRU and the second part of the inference may be performed by/in the network. The resulting output data may be sent (e.g., back) to the WTRU.

FIG. 6 illustrates example delivery and access functions if the media data source originates from the network (e.g., or from the network via the WTRU). In this case, the first part of the inference (e.g., artificial intelligence (AI) model) may be performed by the network (e.g., on the network side) and the second part of the inference may be performed by the WTRU (e.g., on the WTRU side).

Pre-processing may be used to adapt the input media to the input inference. Post-processing may be to adapt the output results of the inference to the media consumption.

The terms "layers" and "nodes" may be used interchangeably herein. "Layers" may be used for one or more framework(s) (e.g., Tensorflow). "Nodes" may be used for one or more framework(s) (e.g., ONNX framework).

Details associated with performance metrics may be provided and/or described herein.

There may be a difference between the output result of the model and the real value (e.g., in the process of AI/ML), for example, regardless of the training set or the sample used (e.g., new sample). Model evaluation may include using different evaluation metrics to understand the performance of artificial intelligence/machine learning models and its advantages and disadvantages. Model evaluation may (e.g., be an indispensable part of the model development phases which can) help to discover the appropriate model to express the data and evaluate the performance of the selected model.

Different AI/ML work tasks may have different evaluation metrics, and the same machine learning task may have different evaluation metrics (e.g., each metric may have different emphasis, e.g., classification, regression, ranking, clustering, recommendation, etc.).

Scenarios described herein may involve computer vision tasks for model performance metrics. There may be different metrics depending on the type of task performed by the model.

Classification model evaluation may include assessing and measuring the performance of a machine learning model that has been used for classification tasks. Classification model evaluation may have a goal of dividing different images into different categories, for example, to achieve the minimum classification error.

A confusion matrix may include a table used in classification tasks that may summarize the performance of a machine learning model on a set of data for which the true values are known. The confusion matrix may include rows and columns, for example, where a (e.g., each) row may represent the true class of the samples and a (e.g., each) column may represent the predicted class. The confusion matrix may display the number of samples that are classified correctly (e.g., true positives and true negatives) and incorrectly (e.g., false positives and false negatives) by the model.

Table 1: Example Confusion Matrix

| Confusion Matrix | | Predicted Value | |
|---|---|---|---|
| | | Positive | Negative |
| True Value | Positive | **True Positives (TP)** | **False Negatives (FN)** |
| | Negative | **False Positives (FP)** | **True Negatives (TN)** |

true positive (TP) may predict an observation belongs to a class and it actually does belong to that class. A true negatives (TN) may predict an observation does not belong to a class and it actually does not belong to that class. A false positives (FP) may predict an observation belongs to a class but it does not belong to that class. A false negatives (FN) may predict an observation does not belong to a class but it does belong to that class.

Metrics may be used to evaluate and/or measure the performance of a classification model (e.g., or object classification tasks). The metrics may include one or more of the following: accuracy, precision, recall, F1 score, and/or the like.

Accuracy may include a metric (e.g., simple metric) for evaluating classification performance. Accuracy may measure the percentage of correctly classified objects out of the total number of objects in the dataset. Accuracy may be easy to understand and compute. Accuracy may be misleading, for example, if the dataset is imbalanced, or the cost of misclassifying different categories is not equal. Accuracy may include measuring how often the classifier makes the correct predictions. Accuracy may include the ratio between the number of correct predictions and the number of total predictions. Accuracy may be calculated, for example, according to Eq. 1.

$$Accuracy = \frac{TP+TN}{TP+TN+FP+FN} \qquad \text{Eq. 1}$$

Precision may include a measure of the proportion of true positives among objects (e.g., all the objects) that the model classified as positive. Precision may be used (e.g., useful) if (e.g., when) the cost of false positives is high, and may be used (e.g., is essential to) avoid misclassifying objects. Precision may include a measure of the proportion of predicted positive results that are actually positive. Precision may include the fraction of examples (e.g., true positives) among examples (e.g., all of the examples) which were predicted to belong in a certain class (e.g., positive). Precision may be calculated, for example, according to Eq. 2.

$$Precision = \frac{TP}{TP+FP} \qquad \text{Eq. 2}$$

Recall may include a measure of the proportion of true positives among objects (e.g., all the objects) that belong to the positive class in the dataset. Recall may be used (e.g., useful) if (e.g., when) the cost of false negatives is high, and may be used (e.g., essential) to detect objects (e.g., all objects) in the dataset. Recall may include a measure of how much the classifier can predict in an actual positive sample. Recall may include the fraction of examples which were predicted to belong to a class with respect to examples (e.g., all of the examples) that truly belong in the class. Recall may be calculated, for example, according to Eq. 3.

$$Recall = \frac{TP}{TP+FN} \qquad \text{Eq. 3}$$

The F1 score may include the harmonic mean of precision and recall. The F1 score may provide a balanced view of the model's performance. F1-score may include a combination of precision and recall, for example, which may provide a balanced measure of the model's ability to find all true positive cases and its ability to avoid false positives. F1 score may be calculated, for example, according to Eq. 4.

$$F1 = \frac{2*Precision*Recall}{Precision+Recall} \qquad \text{Eq. 4}$$

Metrics may be used for object detection tasks. The metrics (e.g., for object detection tasks) may include one or more of the following: Intersection over Union; precision and recall; average precision; F1 score; etc.

Intersection over Union (IoU) may be used for evaluating object detection algorithms. IoU may measure the overlap between the ground truth bounding box and the predicted bounding box. IoU may include the ratio of the intersection of the two boxes to the union of the two boxes. A higher IoU score may indicate better object detection accuracy.

Precision and Recall may be used as metrics for object detection tasks. Precision may include a measure of the fraction of true positives (e.g., correctly identified objects) out of (e.g., all) predicted positives (e.g., objects identified by the algorithm). Recall may include a measure of the fraction of true positives out of (e.g., all) ground truth positives (e.g., objects that should have been identified). A high precision score may indicate that the algorithm is correctly identifying objects. A high recall score may indicate that the algorithm is not missing any objects.

Average Precision (AP) may be used as a metric for evaluating object detection algorithms. AP may include a measure of the precision at different levels of recall and then may average them. AP may provide a number (e.g., single number) that summarizes the overall performance of the algorithm. A higher AP score may indicate better object detection accuracy.

The F1 score may include the harmonic mean of precision and recall. The F1 score may provide a number (e.g., single number) that summarizes the overall performance of the algorithm. A higher F1 score may indicate better object detection accuracy.

Metrics may be used for object tracking tasks. The metrics (e.g., for object tracking tasks) may include one or more of the following: IoU, Precision and Recall, Mean Average Precision (mAP), or Tracking precision (TP) and Tracking Recall (TR).

IoU may be used for evaluating object tracking algorithms. In this case, IoU may measure the overlap between the ground truth bounding box and the predicted bounding box for each frame in the sequence. A higher IoU score may indicate better object tracking accuracy.

Precision and recall may be used to evaluate object tracking algorithms. In this case, precision may measure the fraction of frames where the algorithm correctly identified the object, while recall may measure the fraction of frames where the algorithm correctly tracked the object.

Mean Average Precision (mAP) may be used as a metric for evaluating object tracking algorithms. It may measure the average precision at different levels of overlap between the ground truth and predicted bounding boxes over the sequence (e.g., entire sequence). A higher mAP score may indicate better object tracking accuracy.

Tracking Precision (TP) and Tracking Recall (TR) may be used as a metric for object tracking. TP may measure the fraction of frames where the predicted bounding box overlaps with the ground truth bounding box by a certain threshold. TR may measure the fraction of ground truth bounding boxes that were successfully tracked. A high TP score may indicate that the algorithm is accurately tracking the object. A high TR score may indicate that the algorithm is not losing track of the object.

AI regression model evaluation may include (e.g., the process of) measuring the accuracy and performance of a regression model developed using artificial intelligence (AI) techniques. Regression analysis may include a statistical method used to predict the relationship between dependent and independent variables. Evaluation metrics used for regression models may include one or more of the following: Mean Squared Error; Root Mean Squared Error; Mean Absolute Error; R-squared; etc.

Mean Squared Error (MSE) may include a measure of the average squared error between the predicted and actual values. MSE may include (e.g., be represented as) the average of the squared differences between the predicted and actual values.

Root Mean Squared Error (RMSE) may include the square root of the mean squared error. RMSE may indicate the deviation of the predicted values from the actual values.

Mean Absolute Error (MAE) may include a measure of the average absolute difference between the predicted and actual values. This metric may be robust to outliers.

R-squared (R2) may be used to determined (e.g., may determine) how well the regression line fits the data by measuring the proportion of the variance explained by the model.

For other non-object related tasks, examples model performance metrics may include one or more of the following: Ranking Model Metrics (e.g., MRR, DCG, NDCG); Statistical Model Metrics (e.g., Correlation); Computer Vision Model Metrics (e.g., PSNR, SSIM, IoU); NLP Model Metrics (e.g., Perplexity, BLEU score); etc.

Examples of multibranch splits are provided herein.

For some models (e.g., or some parts of a model), a node may be connected to one or more (e.g., several) nodes for its input. A node may be connected to one or more (e.g., several) nodes for its output.

A split made at such a node may be referred to as a "multibranch split". A multibranch split may result in one or more (e.g., several) tensors.

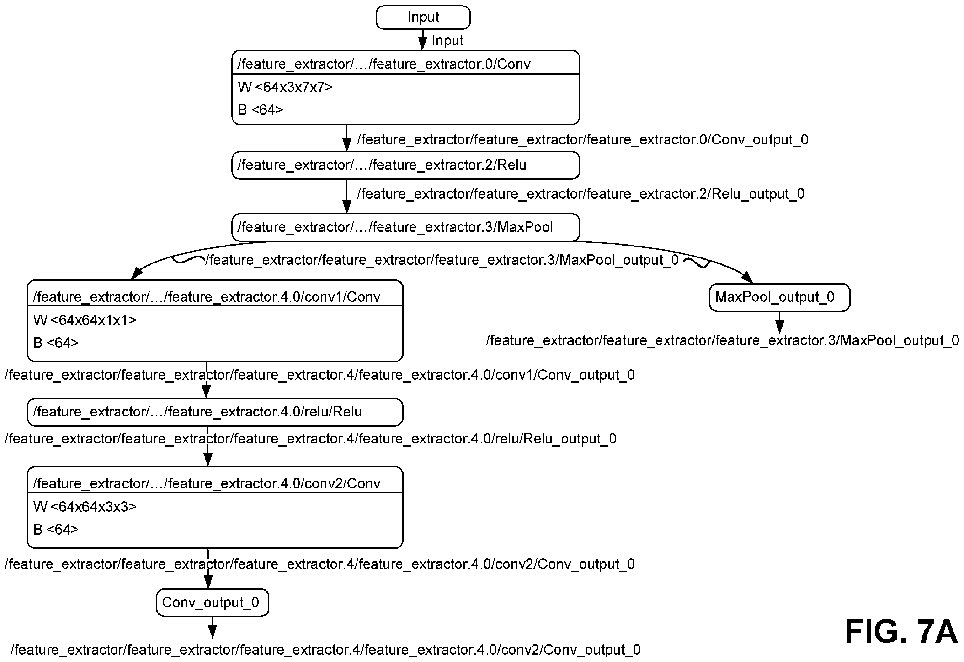

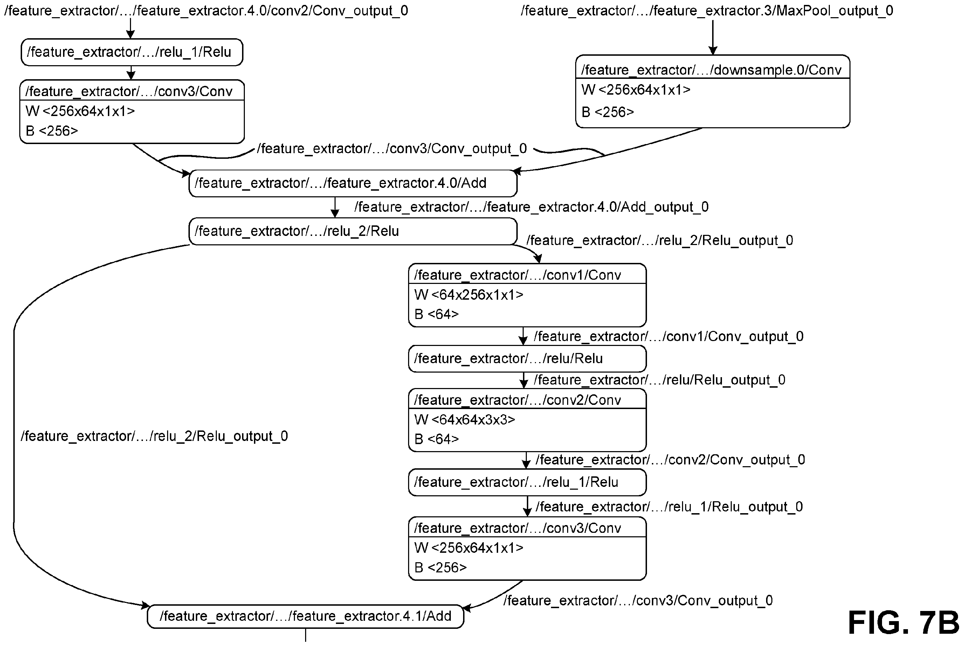

FIG. 7 illustrates an example model split (e.g., for the resnet model split at node 6 with an overview of part I and part II opened with Netron).

The intermediate data communicated between the two parts (e.g., submodels) may be the tensors:

["/feature extractor/feature extractor/feature extractor.4/feature extractor.4.0/conv2/Conv_output 0", "/feature_extractor/feature_extractor/feature_extractor.3/[MaxPool_output_0"].

Systems (e.g., the 5G system) may provide limited bandwidth (e.g., depending on the network congestion and/or the available radio resources). Uplink bandwidth may be limited (e.g., even more limited, for example, than downlink bandwidth). WTRU and/or network server capabilities and network conditions may change over time.

An AI application task may have expected performance specifications (e.g., requirements). The performance specifications may be measured using one or more performance metric(s) (e.g., as described herein).

A split point may produce a large amount of intermediate data (e.g., depending on the complexity of the model). Intermediate data may be compressed to reduce the size of the intermediate data (e.g., and therefore fit the available network bandwidth for an efficient transmission).

Compression of intermediate data may create one or more issues.

Intermediate data may be large (e.g., very large). Intermediate data may comprise a set of tensor data (e.g., with different data types, for example byte, int16, int32, float32, float64, etc.).

If the same compression scheme is applied to the tensors (e.g., all the tensors, for example, regardless of the data type and the level of the layer) may generate issues and/or result in bad accuracy.

If intermediate data is compressed (e.g., and then decompressed), accuracy may depend on the level of loss at each tensor.

Some tensor(s) may carry input media information. Input media information may include image dimension (e.g., tensor of datatype int). Input media information may not be modified (e.g., compressed).

Some tensor(s) may be empty. Empty tensors may not be compressed.

Some tensor(s) size(s) may vary and depend on the original input media data that feeds the model.

Some tensor(s) (e.g., of type float32) may carry less essential information. Such tensor(s) may be compressed with a higher rate (e.g., with less consequence on the accuracy).

Applying a (e.g., the same) compression profile to multiple tensors may be undesirable (e.g., too restrictive. Whether to apply the same compression profile to multiple tensors may depend on the location of the tensors in the model (e.g., if the tensors are located in the first layers of the model or located on the last layers of the model). For example, tensors at the beginning of the model may include data close to the input media (e.g., and may be compressed using a first technique). Other technique(s) may be more adapted for tensors located at the end of the model. Errors generated by the compression on a tensor may result in larger errors on the rest of the model.

Feature(s) described herein may be used to identify tensors to be compressed or not compressed (e.g., an empty tensor may not be compressed).

Feature(s) described herein may relate to carrying intermediate data with some tensors that are encoded and some tensors are not encoded.

Feature(s) described herein may relate to carrying intermediate data with some tensors that are encoded with a first technique and some tensors that are encoded with a second technique.

Feature(s) described herein may relate to negotiating a list of compression methods between two endpoints.

Feature(s) described herein may relate to optimizing compression for a set of tensors.

A first and second device (e.g., a WTRU and a network entity, sometimes also referred to as endpoints) may negotiate a set of compression profiles. The compression profiles may be adapted to a selected split point. The split point may produce a set of intermediate data tensors. The devices may select and apply a compression profile for an individual or a group of tensors (e.g., during the inference loop). The selection (e.g., dynamic selection) may depend on the characteristic(s) of tensor values. Compression method negotiation may involve exchanging explicit compression methods. For example, the list of compression methods may be explicitly proposed by the first device to the second device. Compression method negotiation may involve exchanging implicit compression methods. For example, the list of compression methods may be related to a common table that is known by the endpoints (e.g., each endpoint). This negotiation may be performed through the control plane.

An example bitstream format for encoding representation of compressed or uncompressed tensors in a bitstream is provided herein. The selected tensor compression schemes may be applied on a first endpoint (e.g., before transmitting the bitstream to a second endpoint).

The endpoints may negotiate with one another. For example, a first endpoint and a second endpoint may negotiate a set of compression profiles (e.g., compression profiles that are supported by both endpoints).

The endpoints may use an inference loop. For example, the first endpoint may infer a first part of the model (e.g., resulting in intermediate data). The first endpoint may identify one or more set(s) of tensors. The first endpoint may select a compression profile for a set (e.g., each set) of tensors. The first endpoint may apply the selected compression profile to the tensors (e.g., each tensor) of the set. The first endpoint may encapsulate compressed tensors in a bitstream format. The first endpoint may send the bitstream of compressed tensors to the second endpoint.

The second endpoint may receive the bitstream of compressed tensors. The second endpoint may decode the bitstream of compressed tensors. The second endpoint may decompress compressed tensors. The second endpoint may infer the second part of the model.

Compression scheme metadata may be provided. One or more (e.g., different) means may be used to carry a (e.g., each) compression profile, the group of tensors on which the same compression profile applied, and/or the compressed, encoded tensors. A (pre)defined table of compression profiles may be known to the endpoints. For example, a set of dictionaries and/or list may be used to communicate information between the endpoints. The dictionaries may use framework independent means (e.g., XML/JSON, Protobuf). The dictionaries may use framework dependent means (e.g., Python dictionaries).

Example architectures are provided herein.

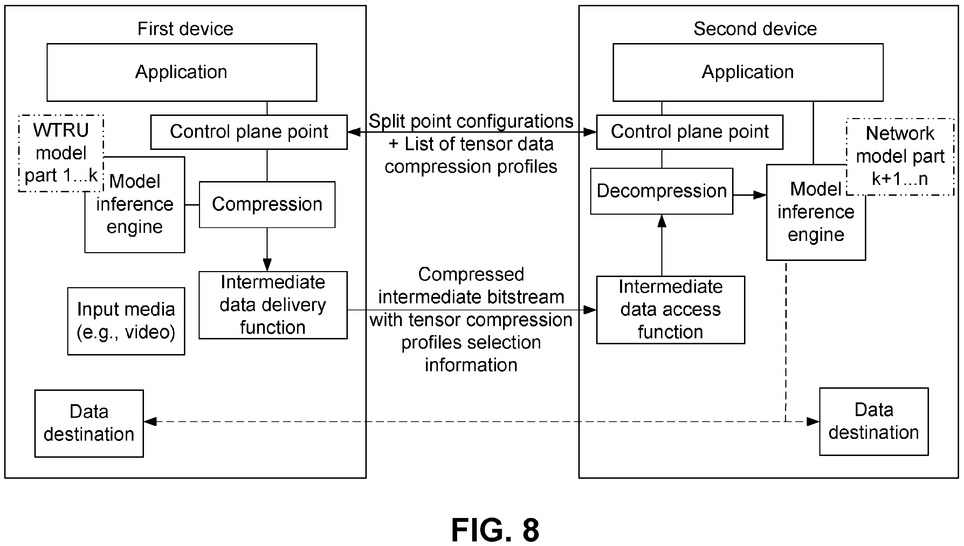

FIG. 8 illustrates a split inference (e.g., with compression of intermediate data) between a first device and a second device (e.g., with the media data source in the first device).

Feature(s) associated with negotiation and setup are provided herein.

The negotiation of a split point configuration may include the negotiation of a list of compression methods or profiles (e.g., that are available on both endpoints). The compression method negotiation may involve exchanging explicit compression methods. For example, the list of compression methods may be explicitly proposed by the first device to the second device. The compression method negotiation may involve exchanging implicit compression methods. For example, the list of compression methods may be related to a common table that is known by the endpoints (e.g., each endpoint). The negotiation may be performed through the control plane.

An example list of compression profile is provided herein.

The negotiation may involve selecting the split point configuration (e.g., including the list of intermediate data tensors). The intermediate data tensors may be identified by tensor names.

The negotiation may involve selecting the intermediate data bitstream format transmitted from one endpoint to another (e.g., including the compression profile). This information may indicate how to obtain tensor data and metadata (e.g., by parsing and decoding the intermediate data bitstream).

The endpoints may share a common compression profiles table.

The endpoints may select a compression profile (e.g., that is available at each endpoint).

The endpoints may select a compression profile according to the AI model.

The endpoints may select a compression profile according to the AI task specifications/requirements (e.g., latency, accuracy).

The endpoints may create and initialize the inference runtime (e.g., on both sides).

Feature(s) associated with an inference loop are provided herein. Feature(s) associated with carrying compressed intermediate data are provided herein.

The inference loop may involve inferring input media data at the first endpoint (e.g., after the negotiation). The inference loop may produce inference results at the second endpoint. The list of compression profile(s) used in the inference loop may be the compression profile(s) that were negotiated.

The first endpoint may input media data. The first endpoint may infer the first model part at the negotiated split point (e.g., identified by a split point identifier).

The first endpoint may organize intermediate data in one or more sets of tensors. The first endpoint may select a compression profile for a (e.g., each) set of tensors (e.g., according to one or more of the following alternatives).

The first endpoint may select a compression profile for a set of tensors by grouping tensors and selecting a compression profile according to the tensor type. For example, tensors different than float16/float32 type may not be encoded. Tensors of float16 may be compressed with a (pre)defined compression profile #j. Tensors of float32 may be compressed with a predefined compression profile #k.

The first endpoint may select a compression profile for a set of tensors by grouping tensors and selecting a compression profile to meet the AI/ML task specifications/requirements (e.g., accuracy, latency) or network conditions (e.g., for delivering media and/or the intermediate data).

AI/ML task latency may include the inference latency of the first part of the model. AI/ML task latency may include the inference latency of the second part of the model. AI/ML task latency may include the transfer latency of the intermediate data. AI/ML task latency may include the compression latency of the intermediate data on the first endpoint. AI/ML task latency may include the decompression latency of the compressed intermediate data on the second endpoint

AI/ML task accuracy may be based on AI/ML metric(s) (e.g., to measure the AI/ML model output quality). Accuracy, precision, recall, F1-score, and/or the like may be used to evaluate or measure the performance of a classification model (e.g., for object classification tasks). Intersection over union (IoU), precision and recall, mean average precision (mAP), tracking precision (TP) and tracking recall (TR), and/or the like may be used for object detection tasks. Evaluation metrics such as mean squared error (MSE), root mean squared error (RMSE), mean absolute error (MAE), R-squared (R2), and/or the like may be used for regression model evaluation. Example model performance metrics (e.g., for other non-object related tasks) may include: ranking model metrics (e.g., MRR, DCG, NDCG); statistical model metrics (e.g., correlation); computer vision model metrics (e.g., PSNR, SSIM, IoU); natural language processing (NLP) model metrics (e.g., perplexity, BLEU score), and/or the like.

Network condition(s) for delivering media and/or the intermediate data may include the amount of data to transfer in a (e.g., one) shot for an image or at a (e.g., specific) frame rate for video, the (e.g., required or available) bandwidth in uplink and/or downlink (e.g., with different impact on the network load and the related uplink and downlink network latencies), the latency of the transmitted data associated with the set of compression profiles selected to a (e.g., each tensor), and/or the like. Network inference latency may be considered.

The first endpoint may use a compression profile to reach a ratio of compression above a certain threshold. The first endpoint may use a fast compression profile to reduce compression and/or decompression latency. The first endpoint may use a high efficiency compression profile. The high efficiency compression profile may reduce transfer latency and/or decrease model output accuracy. The first endpoint may use a low efficiency compression profile. The low efficiency compression profile may increase transfer latency and/or increase model output accuracy.

The first endpoint may target a compressed intermediate data size below a threshold.

The first endpoint may select a compression profile for a set of tensors by grouping tensors (e.g., in a same set of tensors) based on the data size. For example, tensors having a null dimension/shape (e.g., a null size) may not be encoded. Tensors having a size below a threshold may be compressed with a (pre)defined compression profile #i.

The first endpoint may select a compression profile for a set of tensors by grouping tensors (e.g., in a same set of tensors) based on data similarity. The data similarity may be computed (e.g., before applying compression algorithm) to identify a group of similar tensors on which to apply the same compression algorithm.

Compression efficiency may be increased if compression is applied to data having similarity.

The first endpoint may select a compression profile for a set of tensors by grouping tensors based on information associated with an AI model. For example, for model M, tensors having name "tensor_i" and "tensor_j" may be compressed with compression profile #k.

The first endpoint may compress a (e.g., each) set of intermediate data tensors with the selected compression profile. The first endpoint may encode the bitstream according to the negotiated bitstream format (e.g., including split point identifier and sets of compressed tensors, with compression information). The first endpoint may transmit the encoded bitstream (e.g., through the data plane between the two endpoints). The encoded bitstream may include the compressed intermediate data.

The intermediate data may include one or more dictionaries (e.g., JSON file/list of dictionaries including a group of tensors definition and associated compression profile).

The groups may be organized before the inference (e.g., if possible). For example, the groups may be made according to the tensor type, according to the AI task specifications/requirements, and/or according to other information.

The second endpoint may receive bitstream of compressed intermediate data and compression information. The second endpoint may decode the bitstream. The second endpoint may decompress intermediate data according to the received compression information. The second endpoint may pass decompressed intermediate data to a model inference engine.

The second endpoint may infer the second part of the model. The second endpoint may pass the output inference results to a data destination.

Examples of negotiated data formats are provided herein. An example associated compression profile format is provided herein.

An associated compression profile may include information (e.g., the necessary information) useful to apply a compression scheme and/or algorithm to intermediate data tensors.

The compression profile may include a compression algorithm identifier (e.g., a unique identifier that describe a compression profile with its settings and parameters). The compression profile may include a compression algorithm name (e.g., a name of the compression algorithms applied to tensor data). For example, the compression algorithm name may be feature compression for machine (FCM), neural network coding (NNC), deepCABAC, and/or the like.

The compression profile may include a compression algorithm version/profile (e.g., the exact reference version or profile of the selected compression algorithm).

The compression profile may include compression algorithm parameters.

Quantization may be performed. In lossy compression algorithms (e.g., JPEG), quantization may determine the level of detail preserved in the compressed intermediate data. The compression profile may indicate the quantization level.

The compression profile may include a quantization parameter. For example (e.g., for NNC), the quantization parameter (qp) may control the quantization step size (e.g., and the rate-performance trade-off for all weight parameters).

The compression profile may include an entropy coding table. The entropy encoding table may indicate parameters related to entropy encoding techniques (e.g., Huffman coding, arithmetic coding, Golomb coding, and/or the like).

The compression profile may include a compression level. For example, the compression level may indicate lower compression ratios, or slower compression with higher compression ratios.

The compression profile may include a block size. The block size may indicate the size of intermediate data size division (e.g., when applying the compression algorithm). A (e.g., each) block may be processed independently.

The compression profile may include a dictionary size. The dictionary size may indicate the size of the sliding window or the maximum size of the dictionary used for compression.

The compression profile may include a bit depth. The bit depth may correspond to the number of bits used to represent a pixel or audio sample, for example. Lower bit depths may lead to loss of quality but higher compression ratios.

An example associated compression encoding format is provided herein.

Table 1 illustrates an example of a compression profile table.

Table 1. Example compression profile table

| Identifier | Description | Level | Parameters |
|---|---|---|---|
| 0 | No compression | Basic | None |
| 1 | Quantization | Main 1.0 | Float 64/32 bits to 16 bits |
| 7 | Compression deepCABAC | Main 1.1 | None |
| 800 | Compression NNCodec | Main 2.0 | Qp=0 |
| 804 | Compression NNCodec | Main 2.1 | Qp=-4 |
| 806 | Compression NNCodec | Main 2.2 | qp=-6 |
| 810 | Compression NNCodec | Main 2.3 | qp=-10 |
| 814 | Compression NNCodec, | Main 2.4 | qp=-14 |
| 818 | Compression NNCodec | Main 2.5 | qp=-18 |
| 826 | Compression NNCodec | Main 2.6 | qp=-26 |
| 838 | Compression NNCodec | Main 2.7 | qp=-38 |

The following is an example embodiment (e.g., a JSON embodiment) of the compression profile table shown in Table 1.

```
{"compression profiles":
[
    {"Compression profile id": 0,
    "Compression profile name": "no compression",
    "Compression level":1
    },
    {"Compression profile id": 1,
    "Compression profile name": "Quantization 32 bits to 16 bits",
    "version/profile": "numpy 1.26.2",
    "Compression level":0.5
    },
    {"Compression profile id": 7,
    "Compression profile name": "deepCABAC",
    "version/profile": "3.4.2",
    "Compression level":0.4
    },
    {"Compression profile id": 838,
    "Compression profile name": "NNC (Neural Network coding)",
```

```
    "version/profile": "1.0.0",
    "Quantization parameter": -38,
    "Compression level":0.3
    },
    {"Compression profile id": 826,
    "Compression profile name": "NNC (Neural Network coding)",
    "version/profile": "1.0.0",
    "Quantization parameter": -26,
    "Compression level":8.28
    },
    {"Compression profile id": 818,
    "Compression profile name": "NNC (Neural Network coding)",
    "version/profile": "1.0.0",
    "Quantization parameter": -18,
    "Compression level":0.26
    },
    {"Compression profile id": 814,
    "Compression profile name": "NNC (Neural Network coding)",
    "version/profile": "1.0.0",
    "Quantization parameter": -14,
    "Compression level":0.24
    },
    {"Compression profile id": 810,
    "Compression profile name": "NNC (Neural Network coding)",
    "version/profile": "1.0.0",
    "Quantization parameter": -10,
    "Compression level":0.22
    },
    {"Compression profile id": 806,
    "Compression profile name": "NNC (Neural Network coding)",
    "version/profile": "1.0.0",
    "Quantization parameter": -6,
    "Compression level":0.20
    },
    {"Compression profile id": 804,
    "Compression profile name": "NNC (Neural Network coding)",
    "version/profile": "1.0.0",
    "Quantization parameter": -4,
    "Compression level":0.19
    },
    {"Compression profile id": 800,
    "Compression profile name": "NNC (Neural Network coding)",
    "version/profile": "1.0.0",
    "Quantization parameter": 0,
    "Compression level":0.18
}]}
```

An example intermediate data bitstream format is provided herein. An example bitstream format structure is provided herein.

A bitstream structure for the splitting operations (e.g., described herein) may be negotiated between (e.g., two) endpoints (e.g., at the negotiation stage prior to the inference loop).

The bitstream structure may include metadata with intermediate data tensors. Tensors (e.g., individual tensors) may be compressed with an associated compression profile (e.g., from the list of the compression profile negotiated for each given split point configuration).

Metadata may include information to be used to apply a compression profile (e.g., the same compression profile) for the decompression stage for the second endpoint receiving the bitstream from the first endpoint. The bitstream may include the following metadata.

The bitstream may include a split point identifier. The split point identifier may be used to retrieve the corresponding split point configuration and/or the associated compression profile list. A set of split point configurations may be negotiated. The selection of a split point configuration may be adaptive (e.g., change over time at the inference loop stage).

The bitstream may include compression profile information. A selected split point configuration may determine the list of candidate compression profiles to apply on a tensor or a group of tensors. The selection of a compression profile may be adaptive (e.g., done at the inference loop stage). The selection of a compression scheme may be based on (e.g., performed regarding) the current processing capabilities, the current network conditions, the intermediate data tensors characteristics, and/or the like.

The bitstream may include a list of groups of tensors. The tensors associated with the split point may be divided into groups. A (e.g., each) group may use a dedicated compression profile.

The bitstream may include a group identifier. The group identifier may refer to the identifier of the group of tensors.

The bitstream may include a group tensor type. The group tensor type may refer to the type of the tensors of the group (e.g., when all tensors of the group have the same type).

The bitstream may include a list of tensor names, tensor types, and/or tensor shapes. The list may include the names of the tensors for this group (e.g., with their type and tensor shape). Tensor type may be omitted if provided at group level. The tensor shape value may be provided (e.g., if it is possible for intermediate layers to have a variable tensor shape as an input). The compression function may produce a different tensor shape (e.g., if applying compression to a sparse tensor, the resulting tensor shape may be reduced).

The bitstream may include a granularity. The granularity may indicate whether the compression profile is applied to a (e.g., each) tensor (e.g., one by one) or to all the tensors of the group. The bitstream may include the keyword "tensor" to indicate that the compression profile is applied to a (e.g., each) tensor. The bitstream may include the keyword "global" to indicate that the compression profile is applied to all the tensors in the group.

The bitstream may include a compression profile identifier. The compression profile identifier may refer to the identifier of the compression profile in the compression profile table.

The bitstream may include a data bitstream format structure identifier. The data bitstream format structure identifier may identify the underlying bitstream format structure (e.g., as defined herein).

The bitstream may include a data bitstream. The data bitstream may include compressed or uncompressed data (e.g., depending on the selected compression profile, which may be no compression). The structure may have one or more (e.g., three different) formats (e.g., as described herein).

The bitstream may include a list of compressed tensor values. The list of compressed tensor values may be in the same order as the list of tensor names.

The bitstream may include a list or dictionary of tensor names and compressed tensor value. The list or dictionary may identify coupled tensor names and compressed tensor values.

The bitstream may include a global buffer of tensor values. The global buffer may be a buffer of compressed tensor values corresponding to the results of the compression of the tensors listed in the list of tensor names.

A first example bitstream format structure is illustrated in Table 2. The tensor bitstream data may include a list of compressed values associated with a list of tensor names.

Table 2. A first example bitstream format structure

| Split point information | Split point identifier | | An identifier of the split point in a description of a computing graph, may be generated by a neural network description language such as ONNX/NNEF. Identifiers must guarantee unique identification of a specific split point. | Nb:10, 75 Name: Layer_10, |
|---|---|---|---|---|
| Intermediate data tensors compression profile | Tensor compression profile list | | List of tensors or groups of tensors that composed intermediate data. The tensors associated to the split point can be divided in several groups, each group using a dedicated compression profile | e.g. list of ONNX tensor names Tensor1, Tensor2 |
| | | Compression group name | The name of the tensor group | Group 1, Group 2 |
| | | Compression group type | The type of each tensor of the group | Float32 |
| | | Compression Granularity | This indicates if the compression profiles are applied to each tensor one by one (keyword is "tensor"), or to all the tensors of this group (keyword is "global"). | "tensor," "global" |
| | | Tensor name | The name of the tensor | Tensor1 |
| | | Tensor shape | Tensor shape output. The output tensor shape may be different from input and uncompressed tensor shape or may be transposed | [1,64,64,64]. |
| | | Tensor data type | The type of the tensor | Int32, Float 32, |
| | | Compression algorithm profile identifier | Identifies the selected compression algorithm profile in the compression profile table. | None FCM 1.2 |

(continued)

| | Data bit-stream format structure identifier | This parameter identifies the underlying bitstream format structure | 1 |
|---|---|---|---|
| | Tensor bitstream data | This is a list of compressed/uncompressed tensor values in the same order as the list of tensor names. | List |

A second example bitstream format structure is illustrated in Table 3. The tensor bitstream data may include a dictionary of couples (e.g., coupled tensor names and compressed tensor values).

Table 3. A second example bitstream format structure

| Split point information | Split point identifier | An identifier of the split point in a description of a computing graph, may be generated by a neural network description language such as ONNX/NNEF. Identifiers must guarantee unique identification of a specific split point. | Nb:10, 75 Name: Layer_10, |
|---|---|---|---|
| Intermediate data tensors | Tensor compression profile list | List of tensors or groups of tensors that composed intermediate data. The tensors associated to the split point can be divided in several groups, each group using a dedicated compression profile | e.g. list of ONNX tensor names Tensor1, Tensor2 |

(continued)

| | | | | | |
|---|---|---|---|---|---|
| | | | **Compression group name** | The name of the tensor group | Group 1, Group 2 |
| | | | **Compression group type** | The type of each tensor of the group | Float32 |
| | | | **Compression Granularity** | This indicates if the compression profiles are applied to each tensor one by one (keyword is "tensor"), or to all the tensors of this group (keyword is "global"). | "tensor," "global" |
| | | | **Compression algorithm group profile identifier** | Identifies the selected compression algorithm profile in the compression profile table to apply for the group of tensor elements defined in the dictionary below | None FCM 1.2 |
| | | | **Data bitstream format structure identifier** | This parameter identifies the underlying bitstream format structure | 2 |
| | | | **Tensor bitstream data as a Tensor dictionary elements** | This is a list or a dictionary containing couples (tensor metadata, tensor bitstream data) | |
| | | | **Tensor name** | The name of the tensor | Tensor1 |
| | | | **Tensor shape** | Tensor shape output. The output tensor shape may be different from input and uncompressed tensor shape or may be transposed | [1,64,64,64]. |
| | | | **Tensor data type** | The type of the tensor | Int32, Float 32, |
| | | | **Tensor bitstream element data** | This structure of uncompressed or compressed data | |

A third example bitstream format structure is illustrated in Table 4. The tensor bitstream data may include a buffer (e.g., a raw buffer) corresponding to the results of the compression of the tensors listed in the list of tensor names. The tensor bitstream data may be the output of a compression algorithm (e.g., that includes proprietary metadata and data encoding format, for example, NNC output, FMC output, etc.).

Table 4. A third example bitstream format structure

| Split point information | Split point identifier | | An identifier of the split point in a description of a computing graph, may be generated by a neural network description language such as ONNX/NNEF. Identifiers must guarantee unique identification of a specific split point. | Nb:10, 75 Name: Layer_10, |
|---|---|---|---|---|
| Intermediate data tensors compressio n profile | Tensor compression list | | List of tensors or groups of tensors that composed intermediate data. The tensors associated to the split point can be divided in several groups, each group using a dedicated compression profile | e.g., list of ONNX tensor names Tensor1, Tensor2 |
| | | Compression group name | The name of the tensor group | Group 1, Group 2 |
| | | Compression group type | The type of each tensor of the group | Float32 |
| | | Compression Granularity | This indicates if the compression profiles are applied to each tensor one by one (keyword is "tensor"), or to all the tensors of this group (keyword is "global"). | "tensor," "global" |
| | | Tensor name | The name of the tensor | Tensor1 |
| | | Tensor shape | Tensor shape output. The output tensor shape may be different from input and uncompressed tensor shape or may be transposed | [1,64,64,64]. |
| | | Tensor data type | The type of the tensor | Int32, Float 32, |
| | | Compression algorithm profile identifier | Identifies the selected compression algorithm profile in the compression profile table. | None FCM 1.2 |
| | | Data bitstream format structure identifier | This parameter identifies the underlying bitstream format structure | 3 |
| | | Tensor bitstream data | Global buffer of tensor values: This is a buffer of compressed tensor values corresponding to the results of the compression of all the tensors listed in the list of tensor names | Raw data |

Table 5 illustrates the second bitstream format structure with an encoding compression table.

Table 5. An example of the second bitstream format structure with an encoding compression table

| Split point information | Split point identifier | An identifier of the split point in a description of a computing graph, may be generated by a neural network description language such as ONNX/NNEF. Identifiers must guarantee unique identification of a specific split point. | Nb:10, 75 Name: Layer_10, |
|---|---|---|---|

(continued)

| Intermediate data tensors compression profile | Tensor compression list | | List of tensors or groups of tensors that composed intermediate data<br>The tensors associated to the split point can be divided in several groups, each group using a dedicated compression profile | e.g., list of ONNX tensor names Tensor1, Tensor2 |
|---|---|---|---|---|
| | | **Compression profile encoding value** | Identifies the selected compression algorithm profile in the compression profile table below **Error! Reference source not found,** to apply for the group of tensor elements defined in the dictionary below | 0, 7, 806 |
| | | **Data bitstream format structure identifier** | This parameter identifies the underlying bitstream format structure | 4 |
| | | **Tensor dictionary elements** | This is a list or a dictionary containing couples (tensor metadata, tensor bitstream data) | |
| | | | **Tensor name** — The name of the tensor | Tensor1 |
| | | | **Tensor shape** — Tensor shape output. The output tensor shape may be different from input and uncompressed tensor shape or may be transposed | [1,64,64,64]. |
| | | | **Tensor data type** — The type of the tensor | Int32, Float 32, |
| tensor data | **Tensor bitstream data** | | This structure of uncompressed or compressed data | |

Table 6 illustrates an example of compression profile table values.

Table 6. Example compression profiles table values

| Compression Profile Encoding value | Description | Level | Parameters |
|---|---|---|---|
| 0 | No compression | Basic | None |
| 1 | Quantization | Main 1.0 | Float 64/32 bits to 16 bits |
| 7 | Compression deepCABAC | Main 1.1 | None |
| 800 | Compression NNCodec | Main 2.0 | Qp=0 |
| 804 | Compression NNCodec | Main 2.1 | Qp=-4 |
| 806 | Compression NNCodec | Main 2.2 | qp=-6 |
| 810 | Compression NNCodec | Main 2.3 | qp=-10 |
| 814 | Compression NNCodec, | Main 2.4 | qp=-14 |
| 818 | Compression NNCodec | Main 2.5 | qp=-18 |
| 826 | Compression NNCodec | Main 2.6 | qp=-26 |
| 838 | Compression NNCodec | Main 2.7 | qp=-38 |

An example of an intermediate data bitstream is provided herein.

Table 7 shows an example of a bitstream (e.g., applied to ssd_resnet onnx node 30). The bitstream may be transmitted from a first endpoint to a second endpoint. The bitstream may include split point information, intermediate data, and/or input media data.

| data category | data type | | | Data example |
|---|---|---|---|---|
| Split point information metadata | Split point identifier | | | Ssd_resnet node 30 |
| Intermediate data tensor | Intermediate data tensor element list | | | |
| | | Tensor group name | | Group 1 |
| | | Compression Granularity flags | | "global" |
| | | | Tensor name | Relu_output_0 |
| | | | Tensor shape | [1,256,75,75] |
| | | | Tensor data type | float32 |
| | | | Compression profile Identifier | nnc.xx with qp=-14 |
| | | | Tensor data bitstream | [ ] |
| | | | Tensor name | Conv_output_0 |
| | | | Tensor shape | [1,512,38,38] |
| | | | Tensor data type | float32 |
| | | | Compression profile Identifier | nnc.xx with qp=-14 **or 814, table** |
| | | | Tensor data bitstream | [ ] |

Feature(s) associated with JSON are described herein.

Intermediate data issued from the first inference may composed of one or more (e.g., four) tensors. For example:

```
{"tensor1": (int, <tensor1_value>), "tensor2": (float32,<tensor2_value>),"tensor3"
         float32,<tensor3_value>), "tensor4: (float32,<tensor4_value>)}
```

The bitstream data may be organized and carried as described herein.

In an example, tensors may be separated into (e.g., two) groups. For example, the tensors may be separated into a group made of "tensor1" compressed with compression profile 0 (e.g., not compressed), and a group made of tensors "tensor 2," "tensor 3," and "tensor 4" compressed with compression profile 1 (e.g., quantized in 16 bits).

Tensors may be compressed separately. For example, tensor names and tensor values may be presented in fields (e.g., in two separate fields as lists). For example:

```
{"bitstream":
    {"split point node id":70,
    "groups":
    [
    {"group id":0,
    "tensors": [{"tensor_name": "tensorl", "tensor_type": "int "}],
    "granularity":"tensor",
    "compression profile id": 0,
    "compressed data": [[10,20],[],[1024]]
    },
    {"group id":1,
    "tensors": [{"tensor_name": "tensor2", "tensor_type": "flo at32"},{"tensor_nam
e":"tensor3","tensor_type":"float32"},{"tensor_name":"tensor4","tensor_type":
"float32"}],
    "granularity":"tensor",
    "compression profile id": 0,
    "compressed data": [ [[210,220],[2,5,6,7],[125,236]],
                                [[310,320],[32,35,36,37],[3125,3236]],
                                [[410,420],[42,45,46,47],[4125,4236]]]}]}}
```

In an example, tensors may be separated into (e.g., two) groups. For example, the tensors may be separated into a group made of "tensor1" compressed with compression profile 0 (e.g., not compressed), and a group made of tensors "tensor 2," "tensor 3," and "tensor 4" compressed with compression profile 1 (e.g., quantized in 16 bits).

Tensors may be compressed separately. In this case, the tensor names and tensor values may be presented in a dictionary. For example:

```
{"bitstream":
    {"split point node id":70,
    "groups":[
    {"group id":0,
    "granularity":"tensor",
    "tensors":[{"tensor_name":"tensorl","tensor_type":"int"}],
    "compression profile id": 0,
    "compressed data": {"tensor1": [[10,20],[],[1024]]}
    },
    {"group id":1,
    "tensors":[{"tensor_name":"tensor2","tensor_type":"float32"},{"tensor_nam
e": "tensor3", "tensor_type": "float32"},{"tensor_name": " tensor4","tensor_type":
"float32"}],
    "granularity":"tensor",
    "compression profile id": 0,
    "compressed data": {"tensor2": [[210,220],[2,5,6,7],[125,236]],
                                    "tensor3":[[310,320],[32,35,36,37],[3125,3236]],
                                    "tensor4":[[410,420],[42,45,46,47],[4125,4236]]}}]}}
```

In an example, tensors may be separated in two groups. For example, tensors may be separated into a group made of "tensor1" compressed with compression profile 0 (e.g., not compressed), and a group made of tensors "tensor 2," "tensor 3," and "tensor 4" " compressed with compression profile 838 (e.g., NNCodec with qp=-38). The group made of tensors "tensor 2," "tensor 3," and "tensor 4" may be compressed globally (e.g., in a single buffer). For example:

```
{"bitstream":
    {"split point node id":70,
        "groups":[
        {"group id":0,
        "tensors":[{"tensor_name":"tensorl","tensor_type":"int"}],
        "granularity":"tensor",
        "compression profile id": 0,
        "compressed data": {"tensor1": [[10,20],[],[1024]]}
        },
        {"group id":1,
        "tensors":[{"tensor_name":"tensor2","tensor_type":"float32"},{"tensor
        _name": "tensor3", "tensor_type": "float32"},{"tensor_nam e":"tensor4","tensor_ty
pe":"float32"}],
        "granularity":"global",
        "compression profile id": 838,
        "compressed data": [
[210,220],[2,5,6,7],[125,236],[310,320],[32,35,36,37],[3125,3236],[410,420],[
42,45,46,47],[4125,4236] ] }]}}
```

Feature(s) described herein may provide means to select a compression profile (e.g., the best compression profile) at the inference loop. The (e.g., best) profile may be applied to one or more (e.g., each) intermediate data tensor characteristics. This may improve the trade-off between the reduction of the data size and the prediction accuracy.

An example device for media encoding may include a processor configured to perform one or more actions. The device may receive media data. The device may generate intermediate data based on the media data. A portion of the intermediate data may be associated with an intermediate data tensor. The device may determine a set of intermediate data tensors based on a tensor characteristic associated with the intermediate data tensor. The set of intermediate data tensors may include the intermediate data tensor. The device may generate a compressed set of intermediate data tensors based on the set of intermediate data tensors and a compression profile associated with the set of intermediate data tensors. The device may include the compressed set of intermediate data tensors and metadata associated with the compressed set of intermediate data tensors in a bitstream.

The metadata may include a split point identifier associated with a split point configuration. The split point configuration may include the compression profile associated with the set of intermediate data tensors. The metadata may include compression information indicating at least the tensor characteristic of the set of intermediate data tensors associated with the compression profile. The metadata may include a compression profile identifier associated with the compression profile associated with the set of intermediate data tensors. The metadata may include a compression granularity indicating whether the compression profile is globally applied to the set of intermediate data tensors or individually to each intermediate data tensor in the set of intermediate data tensors.

The metadata may include a group identifier associated with the set of intermediate data tensors. The metadata may include a tensor type associated with the set of intermediate data tensors. The metadata may include one or more tensor names associated with the set of intermediate data tensors. The metadata may include one or more tensor values associated with the set of intermediate data tensors. The metadata may include a bitstream format structure identifier.

The device may obtain a plurality of intermediate data tensors associated with the intermediate data. The plurality of intermediate data tensors may include the set of intermediate data tensors. The set of intermediate data tensors may be determined based on one or more of a tensor type, a data characteristic, or a model characteristic.

The intermediate data tensor may be a first intermediate data tensor. The device may determine a tensor type associated with the first intermediate data tensor. The device may determine that a second intermediate data tensor is the same tensor type as that of the first intermediate data tensor. The device may determine to include the first and the second intermediate data tensors in the set of intermediate data tensors based on the determination that the second intermediate data tensor is the same tensor type as that of the first intermediate data tensor.

The device may determine that a data size associated with the first intermediate data tensor is smaller than a data size threshold. The device may determine that a data size associated with a second intermediate data tensor is smaller than the data size threshold. The device may determine to include the first and the second intermediate data tensors in the set of intermediate data tensors based on the determination that the data size associated with the first intermediate data tensor is smaller than the data size threshold and the determination that the data size associated with the second intermediate data tensor is smaller than the data size threshold.

The set of intermediate data tensors may be associated with the tensor characteristic. The compression profile may be selected from a list of compression profiles based on the tensor characteristic associated with the set of intermediate data tensors. The compression profile may be selected from a list of compression profiles based on a latency metric and an accuracy metric associated with the compression profile. The compression profile may be selected from a list of compression profiles based on a threshold performance requirement associated with a data processing task to be performed by the device. The compression profile may be selected from a list of compression profiles based on an available bandwidth for a transmission of the intermediate data.

The latency metric associated with the compression profile may indicate an artificial intelligence (AI) or machine learning (ML) task latency. The AI or ML task latency may include one or more of: an inference latency of a first part of a data processing model associated with the device, an inference latency of a second part of the data processing model associated with a media decoding device, a transfer latency of the intermediate data, a compression latency associated with the device, or the decompression latency associated with the media decoding device.

The device may determine a split point configuration that indicates a list of compression profiles and an association between the set of intermediate data tensors and the compression profile of the list of compression profiles.

An example device for media decoding may include a processor configured to perform one or more actions. The device may receive, in a bitstream, a compressed set of intermediate data tensors and/or metadata associated with the compressed set of intermediate data tensors. The device may generate a set of intermediate data tensors (e.g., a set of decompressed intermediate data tensors) based on the compressed set of intermediate data tensors and/or the metadata associated with the compressed set of intermediate data tensors. The metadata may indicate a compression profile associated with the set of intermediate data tensors. The device may determine one or more model parameters associated with a data processing model (e.g., a second part of the data processing model) based on the set of intermediate data tensors. The device may determine an output of the data processing model, for example, using the plurality of model parameters associated with the data processing model.

For example, the device (e.g., the device for media decoding) may receive, in a bitstream, a compressed set of intermediate data tensors and/or metadata associated with the compressed set of intermediate data tensors. The device may obtain a compression profile (e.g., based on the metadata) and/or a split point configuration. The device may decompress the compressed set of intermediate data tensors based on the compression profile. The device may apply (e.g., infer such as apply data processing) a data processing task based on decompressed set of intermediate data tensors. The device may generate an output of a data processing task using a data processing model (e.g., an AI/ML model). The device may send the output of the data processing task/model.

The metadata may include a split point identifier associated with a split point configuration. The split point configuration may include the compression profile associated with the set of intermediate data tensors. The metadata may include compression information indicating at least a tensor characteristic of the set of intermediate data tensors associated with the compression profile. The metadata may include a compression profile identifier associated with the compression profile associated with the set of intermediate data tensors. The metadata may include a compression granularity indicating whether the compression profile is to be globally applied to the set of intermediate data tensors or individually to each intermediate data tensor in the set of intermediate data tensors.

The metadata may include a group identifier associated with the set of intermediate data tensors. The metadata may include a tensor type associated with the set of intermediate data tensors. The metadata may include one or more tensor names associated with the set of intermediate data tensors. The metadata may include one or more tensor values associated with the set of intermediate data tensors. The metadata may include a bitstream format structure identifier.

The data processing model may be an artificial intelligence (AI) model associated with a split point configuration.

An example method for media encoding may involve receiving media data. The method may involve generating intermediate data based on the media data. A portion of the intermediate data may be associated with an intermediate data tensor. The method may involve determining a set of intermediate data tensors based on a tensor characteristic associated with the intermediate data tensor. The set of intermediate data tensors may include the intermediate data tensor. The method may involve generating a compressed set of intermediate data tensors based on the set of intermediate data tensors and a compression profile associated with the set of intermediate data tensors. The method may involve including the compressed set of intermediate data tensors and metadata associated with the compressed set of intermediate data tensors in a bitstream.

For example, the method (e.g., the method for media decoding) may receive, in a bitstream, a compressed set of intermediate data tensors and/or metadata associated with the compressed set of intermediate data tensors. The method may include obtaining a compression profile (e.g., based on the metadata) and/or a split point configuration. The method may include decompressing the compressed set of intermediate data tensors based on the compression profile. The method may include applying (e.g., inferring such as applying data processing) a data processing task based on decompressed set of intermediate data tensors. The method may include generating an output of a data processing task using a data processing model (e.g., an AI/ML model). The method may include send the output of the data processing task/model.

An example method for media decoding may involve receiving, in a bitstream, a compressed set of intermediate data tensors and metadata associated with the compressed set of intermediate data tensors. The method may involve generating a set of intermediate data tensors based on the compressed set of intermediate data tensors and the metadata associated with the compressed set of intermediate data tensors. The metadata may indicate a compression profile associated with the set of intermediate data tensors. The method may involve determining a plurality of model parameters associated with a data processing model based on the set of intermediate data tensors. The method may involve determining an output of the data processing model using the plurality of model parameters associated with the data processing model.

The metadata may include a split point identifier associated with a split point configuration. The split point configuration may include the compression profile associated with the set of intermediate data tensors. The metadata may include compression information indicating at least the tensor characteristic of the set of intermediate data tensors associated with the compression profile. The metadata may include a compression profile identifier associated with the compression profile associated with the set of intermediate data tensors. The metadata may include a compression granularity indicating whether the compression profile is globally applied to the set of intermediate data tensors or individually to each intermediate data tensor in the set of intermediate data tensors.

A device (e.g., a WTRU or a network device) may perform the first part of a model (e.g., AI/ML model). The second part of the model may be performed by another device. The device that performs the first part (or the second part) of the model may send intermediate data to the other device. The intermediate data may be compressed, for example, using a compression profile. The compression profile may be selected, for example, for tensor(s) associated with the intermediate data. Metadata as described in one or more of examples herein may be sent, for example, from the device that performs the first part of the model to the other device. The metadata may be included in a bitstream, for example, with the compressed intermediate data. The metadata may be associated with a tensor (e.g., an intermediate data tensor) or a set of tensors (e.g., the set of tensors as grouped in one or more examples herein).

Encoding tools and techniques (e.g., as illustrated in FIG. 2) including one or more of quantization, entropy coding, inverse quantization, transformation, and differential coding may be used to enable one or more examples as described herein in the encoder. These encoding tools and techniques may be used to enable one or more of: receiving input data (e.g., media data); generating data (e.g., intermediate data) based on the input data; generating or determining a tensor (e.g., an intermediate data tensor) based on the generated data; determining that a portion of the generated data is associated with the tensor; determine a set of intermediate data tensors based on a tensor characteristic associated with an intermediate data tensor (e.g., based on each tensor characteristic associated with a respective intermediate data tensor); determining whether to include an intermediate data tensor in the set of intermediate data tensors based on the a tensor characteristic associated with the intermediate data tensor; determining a compression profile for an intermediate data tensor (e.g., as described in one or more examples herein); selecting a compression profile from one or more compression profiles (e.g., in a list); generating a compressed intermediate data tensor based on a compression profile (e.g., by compressing the intermediate data tensor using the compression file); generating a compressed set of intermediate data tensors based on a compression profile (e.g., by compressing a set of intermediate data tensors using the compression file); sending a compressed intermediate data tensor; sending a compressed set of intermediate data tensors; sending metadata (e.g., as described in one or more examples herein) associated with the compressed intermediate data tensor; sending metadata (e.g., as described in one or more examples herein) associated with the compressed set of intermediate data tensors; including the compressed intermediate data tensor in a bitstream; including the compressed set of intermediate data tensors in the bitstream; including the metadata associated with the compressed intermediate data tensor in the bitstream; including the metadata associated with the compressed set of intermediate data tensors in the bitstream; etc.

Decoding tools and techniques (e.g., as illustrated in FIG. 3) including, for example, one or more of entropy decoding, inverse quantization, inverse transformation, and differential decoding may be used to enable one or more examples as described herein. For example, these decoding tools and techniques may be used to enable one or more of: receiving a compressed intermediate data tensor; receiving a compressed set of intermediate data tensors; receiving metadata (e.g., as described in one or more examples herein) associated with the compressed intermediate data tensor; receiving metadata (e.g., as described in one or more examples herein) associated with the compressed set of intermediate data tensors; receiving the compressed intermediate data tensor in a bitstream; receiving the compressed set of intermediate data tensors in the bitstream; receiving the metadata associated with the compressed intermediate data tensor in the bitstream; receiving the metadata associated with the compressed set of intermediate data tensors in the bitstream; obtaining a compression profile for an intermediate data tensor (e.g., based on the metadata associated with the intermediate data tensor ); obtaining a compression profile for a set of intermediate data tensors (e.g., based on the metadata associated with the set of intermediate data tensors); generating an intermediate data tensor based on a compression profile (e.g., by decompressing the intermediate data tensor using the compression file); generating a set of intermediate data tensors based on a compression profile (e.g., by decompressing a set of intermediate data tensors using the compression file); determining one or more model parameters associated with a model (e.g., AI/ML model) based on intermediate data tensor(s); determining an output of the model using the model parameter(s) associated with the model; sending the output of the model; etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A device for media encoding, comprising:
   a processor configured to:

   receive media data;
   generate intermediate data based on the media data, wherein a portion of the intermediate data is associated with an intermediate data tensor;
   determine a set of intermediate data tensors based on a tensor characteristic associated with the intermediate data tensor, wherein the set of intermediate data tensors comprises the intermediate data tensor;
   generate a compressed set of intermediate data tensors based on the set of intermediate data tensors and a compression profile associated with the set of intermediate data tensors; and
   include the compressed set of intermediate data tensors and metadata associated with the compressed set of intermediate data tensors in a bitstream.

2. The device of claim 1, wherein the metadata comprises: a split point identifier associated with a split point configuration comprising the compression profile associated with the set of intermediate data tensors; compression information indicating at least the tensor characteristic of the set of intermediate data tensors associated with the compression profile; a compression profile identifier associated with the compression profile associated with the set of intermediate data tensors; and a compression granularity indicating whether the compression profile is globally applied to the set of intermediate data tensors or individually to each intermediate data tensor in the set of intermediate data tensors.

3. The device of claim 1, wherein the metadata further comprises: a group identifier associated with the set of intermediate data tensors; a tensor type associated with the set of intermediate data tensors; one or more tensor names associated with the set of intermediate data tensors; one or more tensor values associated with the set of intermediate data tensors; and a bitstream format structure identifier.

4. The device of claim 1, wherein the processor is configured to obtain a plurality of intermediate data tensors associated with the intermediate data, wherein the plurality of intermediate data tensors comprises the set of intermediate data tensors, and wherein the set of intermediate data tensors is determined based on one or more of a tensor type, a data characteristic, or a model characteristic.

5. The device of claim 1, wherein the intermediate data tensor is a first intermediate data tensor, and wherein the processor is configured to:

determine a tensor type associated with the first intermediate data tensor; and
determine that a second intermediate data tensor is the same tensor type as that of the first intermediate data tensor; and
determine to include the first and the second intermediate data tensors in the set of intermediate data tensors based on the determination that the second intermediate data tensor is the same tensor type as that of the first intermediate data tensor.

6. The device of claim 1, wherein the intermediate data tensor is a first intermediate data tensor, and wherein the processor is configured to:

determine that a data size associated with the first intermediate data tensor is smaller than a data size threshold;
determine that a data size associated with a second intermediate data tensor is smaller than the data size threshold; and
determine to include the first and the second intermediate data tensors in the set of intermediate data tensors based on the determination that the data size associated with the first intermediate data tensor is smaller than the data size threshold and the determination that the data size associated with the second intermediate data tensor is smaller than the data size threshold.

7. The device of claim 1, wherein the set of intermediate data tensors is associated with the tensor characteristic, and the compression profile is selected from a list of compression profiles based on:

the tensor characteristic associated with the set of intermediate data tensors;
a latency metric and an accuracy metric associated with the compression profile;
a threshold performance requirement associated with a data processing task to be performed by the device; and
an available bandwidth for a transmission of the intermediate data.

8. The device of claim 7, wherein the latency metric associated with the compression profile indicates an artificial intelligence (AI) or machine learning (ML) task latency, and wherein the AI or ML task latency comprises one or more of: an inference latency of a first part of a data processing model associated with the device, an inference latency of a second part of the data processing model associated with a media decoding device, a transfer latency of the intermediate data, a compression latency associated with the device, or the decompression latency associated with the media decoding device.

9. The device of claim 1, wherein the processor is configured to determine a split point configuration that indicates a list of compression profiles and an association between the set of intermediate data tensors and the compression profile of the list of compression profiles.

10. A device for media decoding, comprising:
a processor configured to:

receive, in a bitstream, a compressed set of intermediate data tensors and metadata associated with the compressed set of intermediate data tensors;
generate a set of intermediate data tensors based on the compressed set of intermediate data tensors and the metadata associated with the compressed set of intermediate data tensors, wherein the metadata indicates a compression profile associated with the set of intermediate data tensors;
determine a plurality of model parameters associated with a part of a data processing model based on the set of intermediate data tensors;
determine an output of the data processing model using the plurality of model parameters associated with the data processing model; and
send the output of the data processing model.

11. The device of claim 10, wherein the metadata comprises: a split point identifier associated with a split point configuration comprising the compression profile associated with the set of intermediate data tensors; compression information indicating at least the tensor characteristic of the set of intermediate data tensors associated with the compression profile; a compression profile identifier associated with the compression profile associated with the set of intermediate data tensors; a compression granularity indicating whether the compression profile is to be globally applied to the set of intermediate data tensors or individually to each intermediate data tensor in the set of intermediate data tensors; a group identifier associated with the set of intermediate data tensors; a tensor type associated with the set of intermediate data tensors; one or more tensor names associated with the set of intermediate data tensors; one or more tensor values associated with the set of intermediate data tensors; and a bitstream format structure identifier.

12. The device of any one of claims 10-11, wherein the data processing model is an artificial intelligence (AI) model associated with a split point configuration.

13. A method for media encoding, comprising:

receiving media data;
generating intermediate data based on the media data, wherein a portion of the intermediate data is associated with an intermediate data tensor;
determining a set of intermediate data tensors based on a tensor characteristic associated with the intermediate data tensor, wherein the set of intermediate data tensors comprises the intermediate data tensor;
generating a compressed set of intermediate data tensors based on the set of intermediate data tensors and a compression profile associated with the set of intermediate data tensors; and
including the compressed set of intermediate data tensors and metadata associated with the compressed set of intermediate data tensors in a bitstream.

14. A method for media decoding, comprising:

receiving, in a bitstream, a compressed set of intermediate data tensors and metadata associated with the compressed set of intermediate data tensors;
generating a set of intermediate data tensors based on the compressed set of intermediate data tensors and the metadata associated with the compressed set of intermediate data tensors, wherein the metadata indicates a compression profile associated with the set of intermediate data tensors;
determining a plurality of model parameters associated with a data processing model based on the set of intermediate data tensors;
determining an output of the data processing model using the plurality of model parameters associated with the data processing model; and
sending the output of the data processing model.

15. The method of claim 13 or claim 14, wherein the metadata comprises: a split point identifier associated with a split point configuration comprising the compression profile associated with the set of intermediate data tensors; compression information indicating at least the tensor characteristic of the set of intermediate data tensors associated with the compression profile; a compression profile identifier associated with the compression profile associated with the set of intermediate data tensors;
and a compression granularity indicating whether the compression profile is globally applied to the set of intermediate data tensors or individually to each intermediate data tensor in the set of intermediate data tensors.

100

104
RAN

114a

114b

116
102a

116
102b

116

116

116
102c

116
102d

108
PSTN

106
Core Network

112
Other
Networks

110
Internet

FIG. 1A

**FIG. 1B**

**FIG. 1C**

**FIG. 1D**

FIG. 2

**300**

FIG. 3

EP 4 672 614 A1

**FIG. 4**

EP 4 672 614 A1

**FIG. 5**

Network

Network Application

Network model part k+1...n

Model inference engine

Post-process

Intermediate data access function

Inference output delivery function

Intermediate data

Inference output data

WTRU Application

Intermediate data delivery function

Inference output access function

Model inference engine

WTRU model part 1...k

Pre-process

Post-process

Input media (e.g., video)

Media consumption

**FIG. 6**

Input

↓ Input

/feature_extractor/.../feature_extractor.0/Conv

W <64x3x7x7>

B <64>

↓ /feature_extractor/feature_extractor/feature_extractor.0/Conv_output_0

/feature_extractor/.../feature_extractor.2/Relu

↓ /feature_extractor/feature_extractor/feature_extractor.2/Relu_output_0

/feature_extractor/.../feature_extractor.3/MaxPool

/feature_extractor/feature_extractor/feature_extractor.3/MaxPool_output_0

/feature_extractor/.../feature_extractor.4.0/conv1/Conv

W <64x64x1x1>

B <64>

MaxPool_output_0

/feature_extractor/feature_extractor/feature_extractor.3/MaxPool_output_0

/feature_extractor/feature_extractor/feature_extractor.4/feature_extractor.4.0/conv1/Conv_output_0

/feature_extractor/.../feature_extractor.4.0/relu/Relu

/feature_extractor/feature_extractor/feature_extractor.4/feature_extractor.4.0/relu/Relu_output_0

/feature_extractor/.../feature_extractor.4.0/conv2/Conv

W <64x64x3x3>

B <64>

/feature_extractor/feature_extractor/feature_extractor.4/feature_extractor.4.0/conv2/Conv_output_0

Conv_output_0

↓

/feature_extractor/feature_extractor/feature_extractor.4/feature_extractor.4.0/conv2/Conv_output_0

**FIG. 7A**

/feature_extractor/.../feature_extractor.4.0/conv2/Conv_output_0

/feature_extractor/.../feature_extractor.3/MaxPool_output_0

/feature_extractor/.../relu_1/Relu

/feature_extractor/.../conv3/Conv
W <256x64x1x1>
B <256>

/feature_extractor/.../downsample.0/Conv
W <256x64x1x1>
B <256>

/feature_extractor/.../conv3/Conv_output_0

/feature_extractor/.../feature_extractor.4.0/Add

/feature_extractor/.../feature_extractor.4.0/Add_output_0

/feature_extractor/.../relu_2/Relu

/feature_extractor/.../relu_2/Relu_output_0

/feature_extractor/.../conv1/Conv
W <64x256x1x1>
B <64>

/feature_extractor/.../conv1/Conv_output_0

/feature_extractor/.../relu/Relu

/feature_extractor/.../relu/Relu_output_0

/feature_extractor/.../conv2/Conv
W <64x64x3x3>
B <64>

/feature_extractor/.../conv2/Conv_output_0

/feature_extractor/.../relu_1/Relu

/feature_extractor/.../relu_1/Relu_output_0

/feature_extractor/.../conv3/Conv
W <256x64x1x1>
B <256>

/feature_extractor/.../relu_2/Relu_output_0

/feature_extractor/.../conv3/Conv_output_0

/feature_extractor/.../feature_extractor.4.1/Add

**FIG. 7B**

First device

Application

WTRU model part 1...k

Control plane point

Split point configurations + List of tensor data compression profiles

Model inference engine

Compression

Input media (e.g., video)

Intermediate data delivery function

Compressed intermediate bitstream with tensor compression profiles selection information

Data destination

Second device

Application

Control plane point

Network model part k+1...n

Decompression

Model inference engine

Intermediate data access function

Data destination

FIG. 8

EP 4 672 614 A1

Europäisches
Patentamt

European
Patent Office

Office européen
des brevets

# EUROPEAN SEARCH REPORT

**Application Number**

EP 24 30 6003

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/077325 A1 (CANON KK [JP]; CANON AUSTRALIA PTY LTD [AU]) 18 April 2024 (2024-04-18) | 1,3-6, 10,13,14 | INV. H03M7/30 H04N19/146 H04N19/46 |
| A | * abstract; figures * * paragraphs [0004], [0016], [0017], [0048] - [0086], [0118] - [0134], [0149], [0154], [0173] - [0187], [0202], [0212] * | 2,7-9, 11,12,15 | |
| X | "3rd Generation Partnership Project; Technical Specification Group Services and System Aspects; Study on Artificial Intelligence and Machine Learning in 5G media services; (Release 19)", 3GPP STANDARD; TECHNICAL REPORT; 3GPP TR 26.927, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. V0.7.0 11 April 2024 (2024-04-11), pages 1-54, XP052599454, Retrieved from the Internet: URL:https://ftp.3gpp.org/Specs/archive/26_series/26.927/26927-070.zip 26927-070-rm.docx [retrieved on 2024-04-11] | 1,7,8, 10,12-14 | |
| A | * the whole document * | 2-6,9, 11,15 | TECHNICAL FIELDS SEARCHED (IPC) H04N G06N |

The present search report has been drawn up for all claims

| Place of search | Date of completion of the search | Examiner |
|---|---|---|
| The Hague | 26 November 2024 | Scappazzoni, E |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 30 6003

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2024

| Patent document cited in search report | Publication date | Patent family member(s) | Publication date |
|---|---|---|---|
| WO 2024077325 A1 | 18-04-2024 | AU 2022252784 A1<br>WO 2024077325 A1 | 02-05-2024<br>18-04-2024 |

EPO FORM P0459

For more details about this annex : see Official Journal of the European Patent Office, No. 12/82